# EUROPÄISCHE PATENTSCHRIFT

(11) **EP 2 493 944 B1**
(45) Veröffentlichungstag und Bekanntmachung des Hinweises auf die Patenterteilung: **04.03.2015**
(21) Anmeldenummer: 10776630.5
(22) Anmeldetag: 29.10.2010
(51) Int. Cl.: C08G 18/58, C08G 59/40, C08J 9/32, C08K 7/28, C08G 18/00, C08G 101/00

(54) **VORMISCHUNG UND VERFAHREN ZUR HERSTELLUNG EINER THERMISCH EXPANDIERBAREN UND HÄRTBAREN EPOXID-BASIERTEN MASSE**
PREMIX AND METHOD FOR PRODUCING A THERMALLY EXPANDABLE AND CURABLE EPOXY-BASED COMPOUND
PRÉMÉLANGE ET PROCÉDÉ DE PRODUCTION D'UNE MATIÈRE THERMO-EXPANSIBLE ET DURCISSABLE À BASE D'ÉPOXY

(30) Priorität: 29.10.2009 DE 102009046157
(43) Veröffentlichungstag der Anmeldung: 05.09.2012
(73) Patentinhaber: Henkel AG & Co. KGaA, 40589 Düsseldorf (DE)
(72) Erfinder: HORNUNG, Martin, 69120 Heidelberg (DE); BARRIAU, Emilie, 40597 Düsseldorf (DE); RENKEL, Martin, 40215 Düsseldorf (DE)
(86) Internationale Anmeldenummer: PCT/EP2010/066442
(87) Internationale Veröffentlichungsnummer: WO 2011/051430

(56) Entgegenhaltungen:
- US-A- 4 789 690
- US-A1- 2004 131 840
- US-A1- 2005 043 420
- US-A1- 2006 052 570

## Beschreibung

Die vorliegende Erfindung betrifft schäum- und härtbare Epoxidharz-Mischungen, die in aufgeschäumtem und ausgehärtetem Zustand als Strukturschäume zum Aussteifen von insbesondere metallischen Hohlstrukturen verwendet werden können, sowie ein Verfahren zu ihrer Herstellung. Dieses beinhaltet, dass man zwei leicht pumpbare Vormischungen herstellt, vermischt und in einer Form zu einem formstabilen Formteil vorhärten lässt. Das Vorhärten beruht auf der Bildung eines Polyurethans aus einer Alkoholkomponente in der einen und einer Isocyanatkomponenten in der andern Komponente der Vormischung. Das endgültige Aushärten zum Strukturschaum geschieht später beim Erwärmen aufgrund der thermisch induzierten Härtungsreaktion von Epoxidharz-Präpolymeren.

Leichtbauteile für eine konstant maßhaltige Serienfertigung mit hoher Steifigkeit und Strukturfestigkeit werden für viele Anwendungsfelder benötigt. Insbesondere im Fahrzeugbau ist wegen der dort gewünschten Gewichtsersparnis ein hoher Bedarf für Leichtbauteile aus dünnwandigen Strukturen, die trotzdem ausreichende Steifigkeit und Strukturfestigkeit besitzen. Ein Weg zur Erzielung hoher Steifigkeit und Strukturfestigkeit bei möglichst niedrigem Gewicht des Bauteils benutzt Hohlteile, die aus verhältnismäßig dünnem Blech oder Kunststoffplatten gefertigt sind. Dünnwandige Bleche neigen jedoch zur leichten Deformation. Daher ist es bereits seit einiger Zeit bekannt, bei Hohlkörperstrukturen diesen Hohlraum mit einem Strukturschaum auszuschäumen, wodurch einerseits die Deformation oder Verformung verhindert oder minimiert wird und andererseits Festigkeit und Steifigkeit dieser Teile erhöht werden.

Üblicherweise sind derartige geschäumte Verstärkungs- und Versteifungsmittel entweder Metallschäume oder sie enthalten ein thermisch härtbares Harz oder Bindemittel wie z.B. Epoxidharze. Diese Zusammensetzungen enthalten in der Regel ein Treibmittel, Füllstoffe und verstärkende Füllstoffe wie z.B. Mikrohohlkugeln aus Glas. Vorzugsweise haben solche Schäume im aufgeschäumten und ausgehärteten Zustand eine Dichte von 0,3 bis 0,7 g/cm³. Diese Schäume sollen nach der Aushärtung Temperaturen von mehr als 130°C, vorzugsweise mehr als 150°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

WO 2007/004184 beschreibt ein thermisch aufschäumbares Material, das die folgenden Komponenten enthält: ein festes Epoxidharz, einen Schlagzähigkeits-Verbesserer, einen Härter und ein Hitze-aktivierbares Treibmittel. Dabei kann der Schlagzähigkeits-Verbesserer ein thermoplastisches Material darstellen. Beispielsweise werden genannt: Epoxy-Polyurethan-Hybride und Isocyanat-Präpolymere, beispielsweise Isocyanat-terminierte Polyetherpolyole.

WO 2007/025007 offenbart eine Zusammensetzung mit folgenden Komponenten: zumindest ein Epoxidharz, Kautschuk-Partikel mit einer Kern-Schale-Struktur, ein weiterer Schlagzähigkeits-Modifizierer bzw. Zähigkeits-Verbesserer und ein Hitze-aktivierbarer latenter Härter. Zusätzliche kann die Zusammensetzung Treibmittel enthalten, so dass sie als Strukturschaum verwendet werden kann. Als Schlagzähigkeits-Modifizierer werden beispielsweise Polyurethane genannt, die sich von Hydroxyl-terminierten Polyoxyalkylenen, wie beispielsweise Polypropylenglycol oder Polytetrahydrofurandiol ableiten.

WO 2009/017690 beschreibt härbare Epoxidharz-basierte Klebstoffzusammensetzungen, die auch Treibmittel enthalten können. Die Zusammensetzung enthält in einer Ausführungsform zumindest ein Epoxidharz und zumindest ein Polyurethan. WO 2002/088214 offenbart thermisch härtbare Zusammensetzungen für Strukturschäume, die ein Reaktionsprodukt eines Isocyanat-Harzes mit einem Epoxidharz enthalten, das gegenüber Isocyanaten reaktive Gruppen trägt, beispielsweise Hydroxylgruppen.

Dreidimensionale Teile aus Strukturschäumen werden heute üblicherweise im Spritzgussverfahren hergestellt. Aufgrund der Klebrigkeit der Materialen bei Temperaturen oberhalb von 30°C kann das Ausgangsmaterial zur Teileherstellung durch das Spritzgussverfahren nicht als Granulat eingesetzt werden. Um dennoch Teile nach diesem Verfahren herstellen zu können, muss die Materialzuführung zur Spritzgussmaschine kostspielig modifiziert werden. Es ist eine spezielle Zuführung erforderlich und damit ist es nicht möglich, die Teileherstellung auf beliebigen handelsüblichen Spritzgussmaschinen durchzuführen. Werden Formulierungen mit höherem Schmelzpunkt eingesetzt, um den Erweichungspunkt auf ca. 40°C zu erhöhen, muss das Strukturschaum-Teil in der Spritzgussmaschine bei höheren Temperaturen verarbeitet werden, um die Formen zu füllen. Temperaturen über 100 °C sind nicht zulässig, da sonst die Aushärtereaktion der Zusammensetzung angestoßen wird und dies zur Blockade der Maschine führen kann. Bedingt durch die hohe Viskosität bei Temperaturen knapp oberhalb des Schmelzpunkts der Epoxidharze und besonders durch die Klebrigkeit der verflüssigten Epoxidharze, ist die Herstellung von Spritzgussteilen nur sehr schlecht und unter erheblichem technischem Aufwand möglich.

Die vorliegende Erfindung schlägt eine Lösung dieses Problems vor. Sie beruht darauf, dass anstelle einer hochviskosen Masse zwei niedrigviskose Vormischungen in die Form gepumpt oder gespritzt werden und sich erst durch eine Polyurethan-Bildungsreaktion in der Form ein bei Raumtemperatur oder darüber (beispielsweise bis zu 40 °C) formstabiler Formkörper bildet.

Daher betrifft die vorliegende Erfindung eine zweikomponentige Vormischung zur Herstellung einer thermisch expandierbaren und härtbaren Epoxid-basierten Masse, umfassend eine Komponente A und eine Komponente B, wobei die Komponente A mindestens ein Isocyanat und die Komponente B mindestens ein Di- oder Polyol enthält und wobei zusätzlich mindestens eine der Komponenten A oder B mindestens ein Epoxid-Präpolymer, mindestens eine der Komponenten A oder B einen thermisch aktivierbaren Härter für Epoxid-Präpolymere und mindestens eine der Komponenten A und B ein thermisch aktivierbares Treibmittel enthält.

Dabei ist es aus Gründen der besseren Handhabung (z.B. geeignete Viskosität bei beiden Komponenten) bevorzugt, dass die Komponente A mindestens ein Epoxid-Präpolymer und mindestens ein Isocyanat und die Komponente B mindestens ein Epoxid-Präpolymer und mindestens ein Di- oder Polyol enthält, wobei zusätzlich mindestens eine der Komponenten A oder B einen thermisch aktivierbaren Härter für Epoxid-Präpolymere und mindestens eine der Komponenten A oder B ein thermisch aktivierbares Treibmittel enthält.

In einer weiteren Ausführungsform der vorliegenden Erfindung hat es sich aber auch als vorteilhaft erwiesen, wenn die Komponente A mindestens ein Isocyanat und die Komponente B mindestens ein Epoxid-Präpolymer und mindestens ein Di- oder Polyol enthält, wobei zusätzlich mindestens eine der Komponenten A oder B einen thermisch aktivierbaren Härter für Epoxid-Präpolymere und mindestens eine der Komponenten A oder B ein thermisch aktivierbares Treibmittel enthält.

In einer ganz besonders bevorzugten Ausführungsform hat es sich als vorteilhaft erwiesen, wenn nur die Komponente B ein Epoxidharz enthält, dass heißt, dass die Komponenten A frei von Epoxidharzen formuliert ist. Zubereitungen sind erfindungsgemäß "frei von Epoxidharzen" wenn sie weniger als 3Gew.-%, vorzugsweise weniger als 1 Gew.-%, ganz besonders bevorzugt weniger als 0,1 Gew.-% eines Epoxidharzes enthalten. Die derartigen Zusammensetzungen zeichnen sich insbesondere durch eine gesteigerte Lagerstabilität aus.

Die Epoxid-Präpolymere, im folgenden auch als "Epoxidharze" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze werden beispielsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat. Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Präpolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Präpolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-671", "DER-732" und "DER-736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Kresol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite™ 6010, Araldit™ GY-281™, Araldit™ ECN-1273, Araldit™ ECN-1280, Araldit™ MY-720, RD-2 von der Huntsman Int. LLC; DEN™ 432, DEN™ 438, DEN™ 485 von Dow Chemical Co., Epon™ 812, 826, 830, 834, 836, 871, 872,1001, 1002, 1031 etc. von Hexion Specialty Chemicals Inc. und HPT™ 1071, HPT™ 1079 ebenfalls von Hexion Specialty Chemicals Inc., als Novolak-Harze weiterhin beispielsweise Epi-Rez™ 5132 von Hexion Specialty Chemicals Inc., ESCN-001 von Sumitomo Chemical, Quatrex 5010 von Dow Chemical Co., RE 305S von Nippon Kayaku, Epiclon™ N673 von DaiNipon Ink Chemistry oder Epicote™ 152 von Hexion Specialty Chemicals Inc.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Das Epoxid-Äquivalent geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Dabei kann die thermisch expandier- und härtbare Masse mindestens ein Epoxid-Präpolymer enthalten, das bei Raumtemperatur (22°C) flüssig ist. Dieses verringert die Viskosität der Vormischung und erleichtert daher das Einbringen der beiden Vormischungen in die Form.

Daher ist es bevorzugt, dass mindestens eine der Komponenten A oder B, vorzugsweise sowohl die Komponente A als auch die Komponente B, ein bei 22 °C flüssiges Epoxid-Präpolymer enthält.

Es kann aber auch bevorzugt sein, dass mindestens eine der Komponenten A oder B, vorzugsweise die Komponente B, ein bei 22 °C flüssiges Epoxid-Präpolymer enthält.

Als bei Raumtemperatur flüssige Epoxid-Präpolymere werden vorzugsweise Reaktionsprodukte von Epichlorhydrin mit Bisphenol A oder Bisphenol F eingesetzt. Die bei Raumtemperatur flüssigen Epoxidharze haben in der Regel ein Epoxid-Äquivalentgewicht von etwa 150 bis etwa 480. Besonders bevorzugt ist ein Epoxid-Äquivalentgewichtbereich von 182 bis 350.

Jedoch ist es ebenfalls bevorzugt, dass mindestens eine der Komponenten A oder B, vorzugsweise zumindest die Komponente B, zusätzlich zu dem bei 22 °C flüssigen Epoxid-Präpolymer ein bei 22 °C festes oder halbfestes Epoxid-Präpolymer enthält. Dieses trägt dazu bei, dass die Formkörper nach der Vorhärtung die erforderliche Festigkeit aufweisen, und es reduziert die Klebrigkeit der Formkörper im Vergleich zu Formkörpern, die nur flüssige Epoxidharz-Präpolymere enthalten.

Die bei Raumtemperatur (22 °C) festen Epoxidharze sind ebenfalls aus Polyphenolen und Epichlorhydrin erhältlich. Besonders bevorzugt sind hier solche auf der Basis von Bisphenol A oder Bisphenol F mit einem Schmelzpunkt zwischen 45°C und 90°C, vorzugsweise zwischen 50°C und 80°C. Von den flüssigen Epoxidharzen unterscheiden sich letztere im Wesentlichen durch ihr höheres Molekulargewicht, wodurch diese bei Raumtemperatur fest werden. Erfindungsgemäß haben die festen Epoxidharze ein Epoxid-Äquivalentgewicht von ≥ 400. Besonders bevorzugt ist ein Epoxid-Äquivalentgewicht von 450 bis etwa 900. Halbfeste Epoxidharze liegen in ihren Eigenschaften bei 22 °C zwischen festen und flüssigen Epoxidharzen. Im Gegensatz zu flüssigen Epoxidharzen nehmen sie nicht innerhalb von 10 Minuten unter Einfluss der Schwerkraft die Form des Gefäßes an und bilden eine im wesentlichen glatte Oberfläche, sondern sie sind unter Einfluss der Schwerkraft für mindestens 10 Minuten formstabil. Sie können jedoch durch manuell ausgeübten Druck verformt werden, ohne dass sie brechen oder nach Nachlassen des Drucks die alte Form wieder zumindest angenähert einnehmen. Halbfeste Epoxidharze sind also manuell leicht verformbar, aber nicht elastisch.

Als "Isocyanate" im Sinne der vorliegenden Erfindung eignen sich die für Klebstoffanwendungen bekannten difunktionellen Isocyanate (Diisocyanate), trifunktionellen Isocyanate (Triisocyanate) und/oder Polyisocyanate. Unter "Polyisocyanaten" werden erfindungsgemäß Verbindungen verstanden, die mehr als drei Isocyanatgruppen aufweisen.

Neben den monomeren Di-, Tri- und/oder Polyisocyanaten zählen auch die oligomeren und/oder polymeren Di-, Tri- und/oder Polyisocyanate (reaktive Präpolymere) zu den erfindungsgemäßen "Isocyanaten". Unter einem "Oligomer" wird erfindungsgemäß eine Verbindung mit weniger als 4 Wiederholungseinheiten verstanden. Dementsprechend wird unter einem "Polymer" eine Verbindung mit 4 oder mehr Wiederholungseinheiten verstanden.

Beispiele für geeignete monomere Di- ,Tri- oder Polyisocyanate sind 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäurebis-isocyanato-ethylester, Trimethylhexamethylendiisocyanat, 1,4-Diisocyanatobutan, 1,12-Diisocyanatododecan, Dimerfettsäurediisocyanat. Besonders geeignet sind aliphatische Isocyanate wie Hexamethylendiisocynat, Undecan-, Dodecamethylendiisocyanat, 2,2,4-Trimethylhexan-2,3,3-Trimethyl-hexamethylen, 1,3- oder 1,4-Cyclohexandiisocynat-, 1,3- oder 1,4-Tetramethylxyloldiisocynat, Isophorondiisocynat, 4,4-Dicyclohexylmethan-, Lysinesterdiisocyanat oder Tetramethylxylylendiisocyanat (TMXDI).

Difunktionelle Isocyanate sind bevorzugt. Trifunktionelle Isocyanate können jedoch zumindest anteilig mit verwendet werden. Als trifunktionelle Isocyanate geeignet sind Isocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Zur Herstellung von Trimeren geeignete Isocyanate sind die bereits oben genannten Diisocyanate, wobei die Trimerisierungsprodukte von HDI, TMXDI oder IPDI besonders bevorzugt sind. Weiterhin erfindungsgemäß bevorzugt sind die polymeren Di-, Tri- oder Polyisocyanate, wie insbesondere das polymere MDI, sowie Mischungen von polymeren Di- ,Tri- oder Polyisocyanaten mit monomeren Di- ,Tri- oder Polyisocyanaten.

Als Di- oder Polyole können die aus der Polyurethan-Technologie bekannten Polyole mit einem Molekulargewicht bis 50000 g/mol ausgewählt werden. Sie können beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Beispielsweise sind di- oder trifunktionelle Polyethylenpolyetherpolyole geeignet.

Geeignete Polyetherpolyole sind beispielsweise lineare oder verzweigte Polyether, die eine Mehrzahl von Etherbindungen aufweisen und die zumindest zwei Alkoholgruppen enthalten, vorzugsweise an den Kettenenden. Sie enthalten im wesentlichen keine anderen funktionellen Gruppen als die OH-Gruppen. Solche Polyetherpolyole entstehen als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, wie 1,2-Butandiol, 1,3-Butandiol, 1,4-Butandiol und 2,3-Butandiol, Pentandiolen und Hexandiolen, 2,2-Dimethyl-1,3-propandiol, 2-Methylpropandiol, Polyglycerol, 1,6-Hexandiol, 2,4,4-Trimethylhexandiol-1,6, 2,2,4- Trimethylhexandiol-1,6, 1,4-Cyclohexandimethanol, oder aromatischen Diolen, wie 4,4'-Dihydroxy-diphenylpropan, Bisphenol A, Bisphenol F, Brenzkatechin, Resorcin, Hydrochinon oder Gemischen aus zwei oder mehr davon. Weitere, im Rahmen der Erfindung geeignete, Polyole entstehen durch Polymerisation von Tetrahydrofuran (Poly-THF). Ferner sind auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet. Sie weisen dieselbe Anzahl endständiger OH-Gruppen auf wie der Ausgangsalkohol.

Anstelle der oder zusammen mit den Polyetherpolyolen können auch Polyesterpolyole eingesetzt werden. Diese entstehen durch eine Polykondensationsreaktion eines mehrwertigen Alkohols mit beispielsweise 2 bis 15 C-Atomen und vorzugsweise 2 oder 3 OH-Gruppen mit einer oder mehreren Polycarbonsäuren, vorzugsweise solchen mit 2 bis 14 C-Atomen (einschließlich der C-Atome der Carboxylgruppen) und mit 2 bis 6 Carboxylgruppen. Dabei sind Dicarbonsäuren bevorzugt, die zusammen mit Diolen zu linearen Polyesterdiolen oder mit Triolen zu verzweigten Polyestertriolen führen. Umgekehrt lassen sich verzweigte Polyestertriole auch durch Umsetzung eines Diols mit einer Tricarbonsäure erhalten. Als Alkoholkomponente des Polyesterpolyols können beispielsweise verwendet werden: Ethylenglykol, 1,2-Propandiol, 1,3-Propandiol, die isomeren Butandiole, Pentandiole, Hexandiole, 2,2-Dimethyl-1,3-propandiol, 2-Methylpropandiol, 1,6-Hexandiol, 2,4,4-Trimethylhexandiol-1,6, 2,2,4-Trimethylhexandiol-1,6, Cyclohexandiol-1,4, 1,4-Cyclohexandimethanol, oder aromatischen Diolen, wie 4,4'-Dihydroxy-diphenylpropan, Bisphenol A, Bisphenol F, Brenzkatechin, Resorcin, Hydrochinon. Geeignete Carbonsäuren sind beispielsweise: Phthalsäure, Isophthalsäure, Terephthalsäure, Maleinsäure, Dodecylmaleinsäure, Octadecenylmaleinsäure, Fumarsäure, Akonitsäure, 1,2,4-Benzoltricarbonsäure, 1,2,3-Propantricarbonsäure, Malonsäure, Bernsteinsäure, Glutarsäure, Adipinsäure, Pimelinsäure, Sebacinsäure, Cyclohexan-1,2-Dicarbonsäure, 1,4-Cyclohexadien-1,2-dicarbonsäure und weitere. Anstelle der Carbonsäuren können auch deren Anhydride eingesetzt werden.

Wegen des für die erfindungsgemäße Anwendung besonders geeigneten Vernetzungsverhaltens ist es bevorzugt, Diisocyanate in Kombination mit trifunktionellen Polyolen und/oder aliphatischen Diolen einzusetzen. Polyethylenpolyetherpolyole und/oder Butandiole, insbesondere 1,4-Butandiol, können ganz besonders bevorzugte Vertreter der Gruppe der Di- oder Polyole sein.

Als Härter für Epoxid-Präpolymere werden thermisch aktivierbare oder latente Härter für das Epoxidharz-Präpolymer eingesetzt..Diese können beispielsweise ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiämid). Als Vertreter für geeignete Guanamin-Derivate seien alkylierte Benzoguanamin-Harze, Benzoguanamin-Harze oder Methoximethyl-ethoxymethylbenzoguanamin genannt. Bevorzugt ist Dicyandiamid geeignet.

Zusätzlich zu den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Im Rahmen der vorliegenden Erfindung ist es bevorzugt, aber nicht zwingend erforderlich, dass mindestens eine der Komponenten A und B zusätzlich einen derartigen Härtungsbeschleuniger für Epoxid-Präpolymere enthält, insbesondere Addukte von Aminoverbindungen an Epoxidharze.

Als Treibmittel eignen sich im Prinzip alle bekannten Treibmittel wie z. B. "chemische Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis-(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" bzw. "Expancel^{®}" von den Firmen Pierce & Stevens bzw. Casco Nobel im Handel erhältlich.

Die Menge an Treibmittel wählt man vorzugsweise so, dass sich das Volumen der nach der Vereinigung der Komponenten A und B vorgehärteten Masse beim Erwärmen auf Aktivierüngstemperatur (oder Expansionstemperatur) um mindestens 10 %, vorzugsweise mindestens 20 % und insbesondere mindestens 50 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um mindestens 10 %, vorzugsweise um mindestens 20 % und insbesondere mindestens 50 % größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels so einstellen, dass sie unter 300 %, insbesondere unter 200 % liegt.

Die Aktivierungstemperatur liegt vorzugsweise im Bereich von 120 bis 220 °C. Diese Temperatur soll vorzugsweise für eine Zeitdauer im Bereich von 10 bis 150 Minuten aufrecht gehalten werden.

Zur Beschleunigung der Vorhärtung der vereinigten Vormischungen unter Polyurethanbildung ist es bevorzugt, dass mindestens eine der Komponenten A und B (vorzugsweise B) zusätzlich einen Härtungskatalysator für Isocyanate enthält. Beispielsweise sind hierfür Dialkylzinn-Dicarboxylate geeignet, wie beispielsweise Dibutylzinn-Dicarboxylate. Die Carboxylat-Gruppen können ausgewählt werden aus solchen mit insgesamt (also einschließlich der Carboxylgruppe) 2 bis 18 C-Atomen. Als Carbonsäuren zur Bildung der Carboxylate geeignet sind beispielsweise Essigsäure, Propionsäure, Buttersäure, Valeriansäure, Capronsäure, Caprylsäure, Caprinsäure, Laurinsäure, Palmitinsäure und Stearinsäure. Insbesondere ist Dibutylzinn-Dilaurat geeignet. Des Weiteren können metallorganische Verbindungen auf Basis Bismuth und Zink wie z. B. Bismuth-Zink-Neodecanoat oder aber rein organische Beschleuniger wie Dimethylbenzylamin oder Diazabicyclooctan verwendet werden.

Die Komponente A enthält, bezogen auf die gesamte Komponente A, vorzugsweise 5 bis 100 Gew.-%, insbesondere 8 bis 85 Gew.% Isocyanat, ganz besonders bevorzugt 8 bis 75 Gew.-%, Isocyanat.

Weiterhin gilt für die Zusammensetzung der Komponente A vorzugsweise eine oder beide der folgenden Bedingungen:
- Der Gewichtsanteil des Epoxid-Präpolymers, bezogen auf die gesamte Komponente A, beträgt 25 bis 50 Gew.-%, vorzugsweise 30 bis 45 Gew.-%;
- Der Gewichtsanteil des Isocyanats, bezogen auf die gesamte Komponente A, beträgt 5 bis 40 Gew.-%, vorzugsweise 8 bis 35 Gew.-%.

Besonders bevorzugt ist es, dass diese beiden Bedingungen gleichzeitig gelten.

Alternativ kann es für die Zusammensetzung der Komponente A bevorzugt sein, wenn eine oder beide der folgenden Bedingungen gilt:
- Der Gewichtsanteil des Epoxid-Präpolymers, bezogen auf die gesamte Komponente A, beträgt 0 bis 50 Gew.-%, vorzugsweise 0 bis 45 Gew.-%;
- Der Gewichtsanteil des Isocyanats, bezogen auf die gesamte Komponente A, beträgt 5 bis 90 Gew.-%, vorzugsweise 10 bis 85 Gew.-%.

Besonders bevorzugt ist es, dass diese beiden Bedingungen gleichzeitig gelten.

Insbesondere die Komponenten A, die frei von Epoxid-Präpolymeren formuliert sind, zeichnen sich durch verbesserte Lagerstabilitäten aus.

Zusätzlich kann die Komponente A einen oder mehrere, vorzugsweise alle, der folgenden Bestandteile, bezogen auf die gesamte Komponente A, enthalten:
i) 1 bis 5 Gew.-%, vorzugsweise 2 bis 4 Gew.% thermisch aktivierbares Treibmittel,
ii) 0 bis 30 Gew.-%, vorzugsweise 5 bis 20 Gew.-% Leichtfüllstoff,
iii) 0,5 bis 5 Gew.-%, vorzugsweise 1 bis 4 Gew.-% Wasser bindendes Mittel wie beispielsweise Calciumoxid,
iv) 0,1 bis 5 Gew.-%, vorzugsweise 1 bis 4 Gew.-% Härtungsbeschleuniger.

Alternativ kann die Komponente A einen oder mehrere, vorzugsweise alle, der folgenden Bestandteile, bezogen auf die gesamte Komponente A, enthalten:
i) 0 bis 20 Gew.-%, vorzugsweise 2 bis 10 Gew.% thermisch aktivierbares Treibmittel,
ii) 0 bis 30 Gew.-%, vorzugsweise 5 bis 20 Gew.-% Leichtfüllstoff,
iii) 0,5 bis 6 Gew.-%, vorzugsweise 1 bis 5 Gew.-% Wasser bindendes Mittel wie beispielsweise Calciumoxid,
iv) 0 bis 10 Gew.-%, vorzugsweise 1 bis 4 Gew.-% Härtungsbeschleuniger für Epoxide,
v) 0 bis 50 Gew.% vorzugsweise 5 bis 20 Gew.-% Toughener.

Für die Komponente B gilt vorzugsweise eine oder beide der folgenden Bedingungen:
- Der Gewichtsanteil des Epoxid-Präpolymers, bezogen auf die gesamte Komponente B, beträgt 40 bis 80 Gew.-%, vorzugsweise 50 bis 65 Gew.-%;
- Der Gewichtsanteil des Di- oder Polyols, bezogen auf die gesamte Komponente B, beträgt 2,5 bis 35 Gew.-%, vorzugsweise 4 bis 25 Gew.-%.

Besonders bevorzugt ist es, dass diese beiden Bedingungen gleichzeitig gelten.

Alternativ gilt für die Komponente B vorzugsweise eine oder beide der folgenden Bedingungen:
- Der Gewichtsanteil des Epoxid-Präpolymers, bezogen auf die gesamte Komponente B, beträgt 35 bis 80 Gew.-%, vorzugsweise 40 bis 65 Gew.-%;
- Der Gewichtsanteil des Di- oder Polyols, bezogen auf die gesamte Komponente B, beträgt 2,5 bis 35 Gew.-%, vorzugsweise 4 bis 25 Gew.-%.

Besonders bevorzugt ist es, dass diese beiden Bedingungen gleichzeitig gelten.

Dabei enthält die Komponente B vorzugsweise sowohl bei 22 °C flüssige als auch bei 22 °C feste oder halbfeste Epoxid-Präpolymere. Dabei sind vorzugsweise 10 bis 40, insbesondere 20 bis 35 Gew.% des Gesamt-Epoxids flüssig und der Rest fest.

Zusätzlich kann die Komponente B einen oder mehrere, vorzugsweise alle, der folgenden Bestandteile, bezogen auf die gesamte Komponente B, enthalten:
i) 0,5 bis 5 Gew.-%, vorzugsweise 1 bis 3 Gew.-% thermisch aktivierbares Treibmittel,
ii) 5 bis 30 Gew.-%, vorzugsweise 8 bis 20 Gew.% Leichtfüllstoff,
iii) 0,5 bis 5 Gew.-%, vorzugsweise 1 bis 3 Gew.-% Wasser bindendes Mittel wie beispielsweise Calciumoxid,
iv) 2 bis 15 Gew.-%, vorzugsweise 3 bis 10 Gew.-% thermisch aktivierbarer Härter für Epoxide
v) 0,005 bis 0,5 Gew.-%, vorzugsweise 0,02 bis 0,1 Gew.-% Härtungsbeschleuniger wie weiter oben beschrieben, insbesondere Dibutylzinndilaurat.

Alternativ kann die Komponente B zusätzlich einen oder mehrere, vorzugsweise alle, der folgenden Bestandteile, bezogen auf die gesamte Komponente B, enthalten:
i) 0,5 bis 5 Gew.-%, vorzugsweise 1 bis 3 Gew.-% thermisch aktivierbares Treibmittel,
ii) 0 bis 30 Gew.-%, vorzugsweise 5 bis 20 Gew.-% Leichtfüllstoff,
iii) 0,5 bis 6 Gew.-%, vorzugsweise 1 bis 5 Gew.-% Wasser bindendes Mittel wie beispielsweise Calciumoxid,
iv) 0,5 bis 15 Gew.-%, vorzugsweise 1 bis 10 Gew.-% thermisch aktivierbarer Härter für Epoxide,
v) 0,005 bis 0,5 Gew.-%, vorzugsweise 0,02 bis 0,1 Gew.-% Härtungsbeschleuniger für Isocyanate wie weiter oben beschrieben, insbesondere Dibutylzinndilaurat,
vi) 0 bis 10 Gew.-%, vorzugsweise 1 bis 4 Gew.-% Härtungsbeschleuniger für Epoxide sowie
vii) 0 bis 50 Gew.-% vorzugsweise 5 bis 20 Gew.-% Toughener.

In der Regel enthalten die erfindungsgemäß einsetzbaren Stoffgemische weiterhin an sich bekannte Füllstoffe wie zum Beispiel die diversen gemahlenen oder gefällten Kreiden, Ruß, Calcium-Magnesiumcarbonate, Talkum, Schwerspat sowie insbesondere silikatische Füllstoffe vom Typ des Aluminium-Magnesium-Calcium-Silicats, z. B. Wollastonit, Chlorit. Vorzugsweise können Glimmer-haltige Füllstoffe mit verwendet werden, ganz besonders bevorzugt ist hier ein so genannter 2- Komponentenfüllstoff aus Muskovit-Glimmer und Quarz mit niedrigem Schwermetallgehalt.

Zur Gewichtsreduzierung kann das Stoffgemisch zusätzlich zu den vorgenannten "normalen" Füllstoffen so genannte Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in der ausgehärteten Formkörpermatrix eine hohe Druckfestigkeit des Formkörpers gewährleisten.

In einer besonders bevorzugten Ausführungsform enthalten die thermisch härtbaren Massen zusätzlich Fasern, beispielsweise auf der Basis von Aramidfasern, Kohlenstoff-Fasern, Metall-fasern - z.B. aus Aluminium-, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Weiterhin können die erfindungsgemäßen härtbaren Massen gängige weitere Hilfs- und Zusatzmittel wie beispielsweise Weichmacher, Rheologie-Hilfsmittel, Netzmittel, Haftvermittler, Alterungsschutzmittel, Stabilisatoren und/oder Farbpigmente enthalten. Je nach Anforderungsprofil in Bezug auf Verarbeitungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren.

Gegebenenfalls können die erfindungsgemäßen Massen Reaktivverdünner zum Einstellen des Fließverhaltens enthalten. Reaktive Verdünner im Sinne dieser Erfindung sind Epoxigruppen enthaltende, niederviskose Substanzen (Glycidylether oder Glycidylester) mit aliphatischer oder aromatischer Struktur. Typische Beispiele für Reaktivverdünner sind Mono-, Di- oder Triglycidylether von C₆- bis C₁₄-Monoalkoholen oder Alkylphenolen sowie die Monoglycidylether des Cashewnuss-Schalenöls, Diglycidylether des Ethylenglycols, Diethylenglycols, Triethylenglycols, Tetraethylenglycols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C₆- bis C₂₄- Carbonsäuren oder deren Mischungen.

Zur Verbesserung des Bruchverhaltens, insbesondere bei Temperaturen unterhalb von 0 °C, können die erfindungsgemäßen Zweikomponenten-Zubereitungen einen oder mehrere unterschiedliche so genannte Schlagzähigkeits-Verbesserer (englisch: "toughener") enthalten. Derartige Schlagzähigkeits-Verbesserer sind dem Fachmann auf dem Gebiet der Epoxid-Klebstoffe bekannt. Beispielsweise können sie ausgewählt sein aus: Thermoplastischen Isocyanaten oder Polyurethanen, Kautschuk-Partikeln, insbesondere solchen mit Kern-Schale-Struktur, und Block-Copolymeren, insbesondere solchen, die einen ersten Polymerblock mit einer Glasübergangstemperatur von unterhalb 15 °C und einen zweiten Polymerblock mit einer Glasübergangstemperatur von oberhalb 25 °C enthalten. Derartige Block-Copolymere sind vorzugsweise ausgewählt aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block. Spezielle Beispiele hierfür sind Block-Copolymere mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat.

Erfindungsgemäß bevorzugte "toughener" sind weiterhin Kautschuk-Partikel mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysilo-xan-Elastomer und/oder eine Schale aus einem Alkyl(meth)acrylat-Homopolymer oder-Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen.

Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale covalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kerne-Schale-Partikel so aufgebaut, dass der Kern 50 bis 95 Gew.-% des Kerne-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kerne-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kerne-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kerne-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kerne-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Dieselbe Funktion wie die vorstehend genannten Kautschuk-Partikel mit Kern-Schale-Struktur können anorganische Partikel übernehmen, die eine Hülle aus organischen Polymeren aufweisen.

In dieser Ausführungsform enthält die erfindungsgemäße Masse vorzugsweise anorganische Partikel, die eine Hülle aus organischen Polymeren aufweisen, wobei die organischen Polymere ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die Acrylsäure- und/oder Methacrylsäureester stellen vorzugsweise Methyl- und/oder Ethylester dar, wobei besonders bevorzugt mindestens ein Anteil der Ester als Methylester vorliegt. Zusätzlich können die Polymere auch unveresterte Acryl- und/oder Methacrylsäure enthalten, was die Anbindung der organischen Polymere an die Oberfläche der anorganischen Partikel verbessern kann. Daher ist es in diesem Fall besonders bevorzugt, wenn die Monomereinheiten aus unveresterter Acryl- und/oder Methacylsäure (nahe) an demjenigen Ende der Polymerkette liegen, das sich an die Oberfläche der anorganischen Partikel bindet.

Dabei ist es bevorzugt, dass die organischen Polymere zu mindestens 80 Gew.-% aus Acrylsäure- und/oder Methacrylsäureester bestehen. Insbesondere können sie zu 90 Gew.-%, 95 Gew-% oder vollständig hieraus bestehen. Sofern die organischen Polymere andere Monomere als diese Acrylsäure- und/oder Methacrylsäureester bzw. unveresterte Acrylsäure- und/oder Methacrylsäure enthalten, sind diese vorzugsweise ausgewählt aus Comonomeren, die Epoxy-Hydroxy- und/oder Carboxyl-Gruppen aufweisen.

Die organischen Polymere der Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Die anorganischen Partikel weisen vor dem Aufbringen der Hülle aus organischen Polymeren vorzugsweise eine mittlere Teilchengröße im Bereich von 1 bis 1000, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder - hydroxide sowie SiO₂ bzw. die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Prepolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerizati-on of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:
"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen zu anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Erfindungsgemäß enthält die Masse als zusätzliche Komponente e) mindestens ein Block-Copolymer. Dieses wird vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten. Weiterhin sind solche Block-Copolymere geeignet, die ausgewählt sind aus solchen, bei denen ein erster Polymerblock ausgewählt ist aus einem Polybutadien- oder Polyisoprenblock und ein zweiter Polymerblock ausgewählt ist aus einem Polystyrol- oder einem Polymethylmethacrylat-Block.

Beispielsweise wird das Block-Copolymer (e) ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Malein-säureanhydrid, (Meth)Acrylsäureester- Butylacrylat-(Meth)Acrylsäureester, vorzugsweise Methylmethacrylat-Butylacrylat-Methylmethacrylat

Die vorstehend genannten Block-Copolymere entsprechen denjenigen, die auch im Rahmen der bereits zitierten WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Vorstehend wird die Zusammensetzung dieser Block-Copolymere dadurch definiert, dass für jeden Block die Monomer-Einheit angegeben ist. Dies ist so zu verstehen, dass das Block-Copolymer jeweils Polymerblöcke aus den genannten Monomeren enthält. Dabei können bei den einzelnen Polymerblöcken bis zu 20 mol/% der genannten Monomere durch andere CoMonomere ersetzt werden. Insbesondere gilt dies für Blöcke aus Poly-Methylmethacrylat.

Die genannten Block-Copolymere verbessern die Schlagzähigkeit der ausgehärteten erfindungsgemäßen Massen, insbesondere bei Temperaturen unterhalb von 0°C.

Vorzugsweise wählt man das Mischungsverhältnis von bei einer Temperatur von maximal 100 °C unter Normaldruck flüssigen zu unter diesen Bedingungen festen Bestandteilen der beiden Komponenten derart, dass sowohl die Komponente A als auch die Komponente B bei einer Temperatur von höchstens 100 °C , insbesondere von höchstens 80 °C eine solche Viskosität aufweist, dass sie pumpbar ist, insbesondere mit üblichen Verdrängerpumpen wie Kolben- oder Schlauchpumpen. Dies muss empirisch ermittelt werden. Diese Eigenschaft erleichtert das Einbringen der beiden Komponenten in die Form und das Vermischen der Komponenten. Ein solches Gemisch der Komponenten kann unter niedrigem Druck in Formen gegossen oder gepumpt werden. In der Form baut sich nach dem Vermischen der beiden Komponenten rasch Formstabilität durch die Reaktion des Isocyanats mit dem Polyol auf. Die hierfür erforderliche Zeit hängt von der Temperatur ab und kann beispielsweise im Bereich von etwa 5 Minuten bis etwa einer Stunde liegen. Zusammensetzungen gemäß den Ausführungsbeispielen ergeben bei einer Temperatur von 80 °C innerhalb von 10 bis 20 Minuten formstabile Massen.

Weiterhin betrifft die vorliegende Erfindung ein Verfahren zur Herstellung einer thermisch expandierbaren und härtbaren Epoxid-basierten Masse, wobei man die vorstehend beschriebenen Komponenten A und B bei einer Temperatur im Bereich von 20 bis 100 °C (vorzugsweise im Gewichtsverhältnis 4 : 1 bis 1 : 4, insbesondere im Gewichtsverhältnis 3 : 1 bis 1 : 3) miteinander vermischt, die Mischung in eine Form einbringt und in der Form bei einer Temperatur im Bereich von 20 bis 100 °C zu einer vorzugsweise bis zu 40 °C formstabilen Masse vorhärten lässt.

Das Vermischen kann gleichzeitig mit dem Einbringen in die Form erfolgen. Beispielsweise kann man die beiden Komponenten mit Pumpen aus Vorratsgefäßen fördern, über einen Statikmischer oder einen dynamischen Mischer vermischen und aus dem Mischer in die Form einbringen. Dabei können (beispielsweise in einem Tray) mehrere Formen vorgegeben werden, die nacheinander oder gleichzeitig (wenn mehrere Mischer vorgesehen werden) mit den vermischten Komponenten gefüllt werden. Die so erhaltene Anordnung von gefüllten Formen in einem Tray kann nach dem Vorhärten unmittelbar als Verkaufsform an den Endnutzer ausgeliefert werden. Die Anordnung von Formen kann nach Art einer Blisterpackung kontinuierlich von einer Rolle gefertigt und mit den vermischten Komponenten gefüllt werden, was einen kontinuierlichen Produktionsprozess erlaubt.

Das erfindungsgemäße Verfahren ermöglicht eine einfache, schnelle und großvolumige Batch-oder Kontiproduktion der formstabilen Massen ("Formteile"). Hierfür genügt eine einfache 2-K Pumpanlage anstelle der aufwändigeren Spritzgussanlage. Der Pumpvorgang erfolgt bei geringem Druck, so dass Formen aus Aluminium oder Kunststoff verwendet werden können, die deutlich preisgünstiger sind als Spritzgussformen. Hierdurch ist eine kostengünstige Herstellung auch großer Formteile oder großer Stückzahlen eines Strukturschaums möglich. Durch Formwechsel oder durch Vorgabe unterschiedlicher Formen in einem Tray können unterschiedlich ausgeformte formstabile Massen ("Formteile") unmittelbar hintereinander oder gleichzeitig produziert werden, ohne dass wie beim Spritzguss ein aufwändiger Formwechsel erforderlich ist.

Demnach umfasst die vorliegende Erfindung auch eine bei 22 °C formstabile Masse, die nach dem genannten Verfahren erhältlich ist. Vorzugsweise ist diese Masse bis 40 °C formstabil. Der Begriff "formstabil" bedeutet hier, dass ein Formkörper aus dieser Masse sich nicht unter Einfluss der Schwerkraft verformt. Eine Verformung unter Druck ist jedoch möglich und kann sogar das Einsetzen der Formteile in die zu versteifenden Hohlräume erleichtern.

Die Hauptanwendung der erfindungsgemäß erhältlichen Formkörper ist die Versteifung und die Verstärkung von Bauteilen, insbesondere Bauteilen für weiße Ware oder von Karosseriebauteilen wie Karosserierahmen, Türen, Kofferraumdeckel, Motorhauben und / oder Dachteilen im Automobilbau. Daher umfasst die vorliegende Erfindung auch ein Verfahren zur Verstärkung und/oder Dämmung eines Bauteils, insbesondere eines hohlen Bauteils, dadurch gekennzeichnet, dass man die vorstehend beschriebene formstabile Masse auf das Bauteil aufbringt oder in das hohle Bauteil einbringt und bei einer Temperatur im Bereich von 120 - 220 °C aufschäumt und aushärtet, vorzugsweise für eine Zeitdauer im Bereich von 10 bis 150 Minuten.

Für dieses Verfahren macht man sich den üblichen Produktionsprozess für lang gestreckte Hohlstrukturen im Fahrzeugbau, beispielsweise für den Rahmen, der die Fahrgastzelle umgibt, zunutze. Diese Hohlstrukturen werden üblicherweise so gefertigt, dass man zwei entsprechend geformte Halbschalen aus Metall herstellt und diese Halbschalen zu der hohlen Rahmenstruktur bzw. eines Teils hiervon zusammenfügt. Solche Hohlstrukturen oder Hohlträger sind beispielsweise die A-, B- oder C-Säule einer Automobilkarosserie, die die Dachstruktur tragen, oder auch Dachholme, Schweller sowie Teile der Radhäuser oder Motorträger. Wie beim Einsetzen von so genannten "pillar filler" oder "baffles" in derartige Hohlstrukturen im Stand der Technik üblich, kann der erfindungsgemäß erhaltene Formkörper mit Hilfe eines Befestigungselements oder eines klebrigen Oberflächenabschnitts an der später zur Innenwand des Hohlraums werdenden Oberfläche der einen Halbschale befestigt werden, bevor man diese mit der anderen Halbschale zur Ausbildung der Hohlstruktur zusammenfügt.

Dabei ist der erfindungsgemäß erhaltene Formkörper vorzugsweise so geformt, dass sein senkrecht zur Längsachse gesehener Querschnitt der Querschnittsform des Hohlraums entspricht.

Der Formkörper ist jedoch so dimensioniert, dass er vor dem Aufschäumen nur an einer oder wenigen Stellen mit der Innenwand des Hohlteils Kontakt hat. Von diesen Stellen abgesehen verbleibt zwischen den parallel zur Längsachse des Formkörpers liegenden Begrenzungsflächen und den Innenwänden des Hohlteils ein Flutspalt einer Breite von etwa 1 bis etwa 10 mm, vorzugsweise von etwa 2 bis etwa 4 mm. Dieser Flutspalt gewährleistet, dass die diversen Prozessflüssigkeiten, mit denen die Rohbaukarosserie behandelt wird, alle Teile der Innenseiten der Hohlraumwände benetzen können. Der Flutspalt schließt sich erst bei der thermischen Expansion des Formkörpers, wodurch dieser seine Zweckerfüllung der Verstärkung, Dämmung, Dämpfung und/oder Abdichtung der Hohlbauteile erreicht. Abstandshalter an den Formkörpern können gewährleisten, dass dieser Flutspalt vor dem Aufschäumen des Formkörpers zuverlässig entsteht und bis zum Aufschäumen erhalten bleibt. Ausführungsbeispiele (Zusammensetzung in Gew.-% bezogen auf die jeweilige GesamtZusammensetzung der Komponenten A und B).

Die Komponenten A und B werden durch Vermischen der Rohstoffe hergestellt, bei 80 °C miteinander vermischt und in Formen gegossen. Die Vorhärtung bei 80 °C führt innerhalb von 15 Minuten nach dem Vermischen und nachfolgendem Abkühlen auf 40 °C zu einer formstabilen Masse, die bei 130 °C zu einem festen Schaum aufschäumt und aushärtet, der die Erfordernisse eines Strukturschaums erfüllt.

### Beispiel 1

| Material | Komponente A | Komponente B |
|---|---|---|
| Epoxid-Präpolymer 1 (bei 22 °C flüssig) | 36,0 | 10,13 |
| Dicyandiamid | -- | 4,43 |
| Epoxidharz-Aminaddukt (Adjicure™ PN 50) | -- | 1,5 |
| Epoxid-Präpolymer 2, Basis: Bisphenol-A / Epichlorhydrin, bei 22 °C fest | -- | 50,08 |
| Kreide (nicht gecoated) | 5,06 | 0,35 |
| expandierbare Kunststoff-Microhohlkugeln (thermisch aktivierbares Treibmittel) | 4,2 | 2,1 |
| Glas-Microhohlkugeln (Leichtfüllstoff) | 25,54 | 12,55 |
| Calciumoxid (Wasser bindendes Mittel) | 3,0 | 1,5 |
| Verzweigter Polyalkohol mit Ester- und Ethergruppen (Desmophen™ 1145) | -- | 17,36 |
| Diphenylmethan-4,4'-Diisocyanat (enthält Isomere und Homologe) | 26,1 | -- |
| Dibutylzinndilaurat | 0,10 | -- |

| | | |
|---|---|---|
| Gewichtsbezogenes Mischungsverhältnis: A : B = 1 : 2 | | |

### Beispiel 2

| Material | Komponente A | Komponente B |
|---|---|---|
| Epoxid-Präpolymer 1 (bei 22 °C flüssig) | 36,0 | 10,4 |
| Dicyandiamid | -- | 4,43 |
| Epoxidharz-Aminaddukt (Adjicure™ PN 50) | 3,0 | |
| Epoxid-Präpolymer 2, Basis: Bisphenol-A / Epichlorhydrin, bei 22 °C fest | -- | 48,74 |
| Kreide | 34,83 | 14,66 |
| expandierbare Kunststoff-Microhohlkugeln (thermisch aktivierbares Treibmittel) | 3,6 | 1,8 |
| Glas-Mikrohohlkugeln (Leichtfüllstoff) | 9,45 | 13,28 |
| Calciumoxid (Wasser bindendes Mittel) | 3,0 | 1,5 |
| Trifunktionelles Polyethylenpolyetherpolyol (Desmophen™ 1240 BT) | -- | 5,14 |
| Diphenylmethan-4,4'-Diisocyanat (enthält Isomere und Homologe) | 10,12 | -- |
| Dibutylzinndilaurat | -- | 0,05 |

| | | |
|---|---|---|
| Gewichtsbezogenes Mischungsverhältnis: A : B = 1 : 2 | | |

| **Rohstoff** | Beispiel 3 | | Beispiel 4 | | Beispiel 5 | | Beispiel 6 | | Beispiel 7 | |
|---|---|---|---|---|---|---|---|---|---|---|
| | Komp. A | Komp. B | Komp. A | Komp. B | Komp. A | Komp. B | Komp. A | Komp. B | Komp. A | Komp. B |
| D.E.R. 331^{®} | 28,5 | 35,1 | -- | 44,9 | -- | 38 | -- | 51,9 | -- | 51,3 |
| D.E.R. 671^{®} | -- | 38 | -- | -- | -- | 10 | -- | -- | -- | -- |
| Desmodur^{®} VL R10 | 15 | -- | 80 | -- | 35 | | 45 | -- | 52 | -- |
| 1,4-Butandiol | -- | 5 | -- | 2,7 | -- | 3 | -- | 3,8 | -- | 4,4 |
| Calciumoxid | 4 | 4 | 4 | 4 | 4 | 4 | 4 | 4 | 4 | 4 |
| Glashohlkugeln 3M VS5500 | 15 | -- | -- | 10 | -- | -- | -- | -- | -- | -- |
| Omyacarb^{®} 4HD | 35 | -- | 15,9 | 30 | 61 | 36,2 | 51 | 31,9 | 44 | 31,9 |
| Expancel^{®} 909 DU80 | 2,4 | 2,4 | -- | 2,4 | -- | 3 | -- | 1,5 | -- | 1,5 |
| Dicyanamid | -- | 8,6 | -- | 5,0 | -- | 4,7 | -- | 5,8 | -- | 5,8 |
| Ajicure^{®} PN50 | -- | 1,8 | -- | 1 | -- | 1 | -- | 1 | -- | 1 |
| Zink-Amin-Salz (Beschleuniger für Isocyanat) | -- | 0,1 | -- | 0,1 | -- | 0,1 | - | 0,1 | -- | 0,1 |
| Farbstoff | 0,1 | | 0,1 | - | -- | 0,1 | -- | 0,1 | -- | 0,1 |
| Summe | 100 | 95,0 | 100 | 100 | 100 | 100 | 100 | 100 | 100 | 100 |
| Mischungsverhältnis | 1 | 1 | 1 | 10 | 1 | 4 | 1 | 4 | 1 | 4 |
| PUR-Anteil (%) | 10 | | 9,7 | | 9 | | 12 | | 14 | |
| Dichte vorgehärtet | 1,04 | | 1,06 | | 1,28 | | 1,43 | | 1,32 | |
| Dichte endgehärtet | 0,27 | | 0,35 | | 0,41 | | 1,00 | | 1,00 | |
| Expansion | 280% | | 200% | | 215% | | 40% | | 30% | |
| Shore A Hardness | 80 | | 70 | | 73 | | 93 | | 93 | |

| | | | | | | | | | | |
|---|---|---|---|---|---|---|---|---|---|---|
| Verzeichnis der eingesetzten Rohstoffe: Ajicure^{®} PN50 Aminaddukt an Epoxidharz; latenter Härter und Beschleuniger für Epoxidharze; Hersteller Ajinomoto D.E.R. 331^{®} Reaktionsprodukt von Bisphenol A mit Epichlorhydrin; bei Raumtemperatur flüssig; EEW 187g/eq; Hersteller Dow D.E.R. 671^{®} Reaktionsprodukt von Bisphenol A mit Epichlorhydrin, bei Raumtemperatur fest; EEW ca. 500 g/eq; Hersteller Dow Desmodur^{®} VL R10 Aromatisches Polyisocyanat auf Basis von Diphenylmethandiisocyanat; Hersteller Bayer Expancel^{®} 909 DU80 expandierbare Mikrohohlkugeln aus Acrylonitril, Methacrylonitril und Methylmethacrylatcopolymeren; Hersteller Expancel Omyacarb^{®} 4HD Calcium Carbonat (Kalksteinmehl); Hersteller Omya GmbH | | | | | | | | | | |

## Patentansprüche

1. Zweikomponentige Vormischung zur Herstellung einer thermisch expandierbaren und härtbaren Epoxid-basierten Masse, umfassend eine Komponente A und eine Komponente B, wobei die Komponente A mindestens ein Isocyanat und die Komponente B mindestens ein Di- oder Polyol enthält und wobei zusätzlich mindestens eine der Komponenten A oder B mindestens ein Epoxid-Präpolymer, mindestens eine der Komponenten A oder B einen thermisch aktivierbaren Härter für Epoxid-Präpolymere und mindestens eine der Komponenten A und B ein thermisch aktivierbares Treibmittel enthält.

2. Zweikomponentige Vormischung nach Anspruch 1,
wobei die Komponente A mindestens ein Isocyanat
und die Komponente B mindestens ein Epoxid-Präpolymer und
mindestens ein Di- oder Polyol enthält
und wobei zusätzlich mindestens eine der Komponenten A oder B
einen thermisch aktivierbaren Härter für Epoxid-Präpolymere und
mindestens eine der Komponenten A oder B ein thermisch aktivierbares Treibmittel enthält.

3. Vormischung nach Anspruch 1 und/oder 2, **dadurch gekennzeichnet, dass** mindestens eine der Komponenten A oder B, vorzugsweise die Komponente B, ein bei 22 °C flüssiges Epoxid-Präpolymer enthält.

4. Vormischung nach Anspruch 3, **dadurch gekennzeichnet, dass** mindestens eine der Komponenten A und B, vorzugsweise die Komponente B, zusätzlich ein bei 22 °C festes oder halbfestes Epoxid-Präpolymer enthält.

5. Vormischung nach einem oder mehreren der Ansprüche 1 bis 4, **dadurch gekennzeichnet, dass** mindestens eine der Komponenten A oder B zusätzlich einen Härtungsbeschleuniger für Epoxid-Präpolymere enthält.

6. Vormischung nach mindestens einem der Ansprüche 1 bis 5, **dadurch gekennzeichnet, dass** mindestens eine der Komponenten A und B zusätzlich einen Härtungskatalysator für Isocyanate enthält.

7. Vormischung nach einem der Ansprüche 1 bis 6, **dadurch gekennzeichnet, dass** die Komponente A, bezogen auf die gesamte Komponente A, 5 bis 100 Gew.-%, vorzugsweise 8 bis 85 Gew.-% Isocyanat enthält.

8. Vormischung nach einem oder mehreren der Ansprüche 1 bis 7, **dadurch gekennzeichnet, dass** für die Zusammensetzung der Komponente A eine oder beide der folgenden Bedingungen gelten:
- Der Gewichtsanteil des Epoxid-Präpolymers, bezogen auf die gesamte Komponente A, beträgt 0 bis 50 Gew.-%, vorzugsweise 0 bis 45 Gew.-%;
- Der Gewichtsanteil des Isocyanats, bezogen auf die gesamte Komponente A, beträgt 5 bis 90 Gew.-%, vorzugsweise 10 bis 85 Gew.-%.

9. Vormischung nach Anspruch 7 und/oder 8, **dadurch gekennzeichnet, dass** die Komponente A zusätzlich einen oder mehrere, vorzugsweise alle, der folgenden Bestandteile, bezogen auf die gesamte Komponente A, enthält:
i) 0 bis 20 Gew.-%, vorzugsweise 2 bis 10 Gew.-% thermisch aktivierbares Treibmittel,
ii) 0 bis 30 Gew.-%, vorzugsweise 5 bis 20 Gew.-% Leichtfüllstoff,
iii) 0,5 bis 6 Gew.-%, vorzugsweise 1 bis 5 Gew.% Wasser bindendes Mittel wie beispielsweise Calciumoxid,
iv) 0 bis 10 Gew.-%, vorzugsweise 1 bis 4 Gew.% Härtungsbeschleuniger für Epoxide,
v) 0 bis 50 Gew.-% vorzugsweise 5 bis 20 Gew.-% Toughener.

10. Vormischung nach einem oder mehreren der Ansprüche 1 bis 9, **dadurch gekennzeichnet, dass** für die Zusammensetzung der Komponente B eine oder beide der folgenden Bedingungen gelten:
- Der Gewichtsanteil des Epoxid-Präpolymers, bezogen auf die gesamte Komponente B, beträgt 35 bis 80 Gew.-%, vorzugsweise 40 bis 65 Gew.-%;
- Der Gewichtsanteil des Di- oder Polyols, bezogen auf die gesamte Komponente B, beträgt 2,5 bis 35 Gew.-%, vorzugsweise 4 bis 25 Gew.-%.

11. Vormischung nach Anspruch 10, **dadurch gekennzeichnet, dass** die Komponente B zusätzlich einen oder mehrere, vorzugsweise alle, der folgenden Bestandteile, bezogen auf die gesamte Komponente B, enthält:
i) 0,5 bis 5 Gew.-%, vorzugsweise 1 bis 3 Gew.-% thermisch aktivierbares Treibmittel,
ii) 0 bis 30 Gew.-%, vorzugsweise 5 bis 20 Gew.-% Leichtfüllstoff,
iii) 0,5 bis 6 Gew.-%, vorzugsweise 1 bis 5 Gew.-% Wasser bindendes Mittel wie beispielsweise Calciumoxid,
iv) 0,5 bis 15 Gew.-%, vorzugsweise 1 bis 10 Gew.-% thermisch aktivierbarer Härter für Epoxide,
v) 0,005 bis 0,5 Gew.-%, vorzugsweise 0,02 bis 0,1 Gew.-% Härtungsbeschleuniger für Isocyanate wie weiter oben beschrieben, insbesondere Dibutylzinndilaurat,
vi) 0 bis 10 Gew.-%, vorzugsweise 1 bis 4 Gew.-% Härtungsbeschleuniger für Epoxide sowie
vii) 0 bis 50 Gew.-% vorzugsweise 5 bis 20 Gew.-% Toughener

12. Vormischung nach einem oder mehreren der Ansprüche 1 bis 11, **dadurch gekennzeichnet, dass** man sowohl für die Komponente A als auch für die Komponente B das Mischungsverhältnis von bei einer Temperatur von maximal 100 °C unter Normaldruck flüssigen zu unter diesen Bedingungen festen Bestandteilen derart wählt, dass sowohl die Komponente A als auch die Komponente B bei einer Temperatur von höchstens 100 °C eine solche Viskosität aufweist, dass sie pumpbar ist.

13. Verfahren zur Herstellung einer thermisch expandierbaren und härtbaren Epoxid-basierten Masse, **dadurch gekennzeichnet, dass** man die Komponenten A und B nach einem oder mehreren der Ansprüche 1 bis 12 bei einer Temperatur im Bereich von 20 bis 100 °C miteinander vermischt, die Mischung in eine Form einbringt und in der Form bei einer Temperatur im Bereich von 20 bis 100 °C zu einer bis zu 40 °C formstabilen Masse vorhärten lässt.

14. Bei 22 °C formstabile Masse, die nach Anspruch 13 erhältlich ist.

15. Verfahren zur Verstärkung und/oder Dämmung eines Bauteils, **dadurch gekennzeichnet, dass** man eine Masse nach Anspruch 14 auf das Bauteil aufbringt oder in das Bauteil einbringt und bei einer Temperatur im Bereich von 120 - 220 °C aufschäumt und aushärtet.

16. Fahrzeug oder metallisches Bauteil, das mit mindestens einem Formkörper versteift oder verstärkt wurde, der nach Anspruch 13 erhalten wurde.

## Claims

1. A two-component premix for preparing a heat-expandable and heat-curable epoxy-based material, comprising a component A and a component B, component A containing at least one isocyanate and component B containing at least one diol or polyol and additionally at least one of components A or B containing at least one epoxy prepolymer, at least one of components A or B containing a heat-activatable hardener for epoxy prepolymers and at least one of components A and B containing a heat-activatable blowing agent.

2. The two-component premix according to claim 1,
component A containing at least one isocyanate
and component B containing at least one epoxy prepolymer and at least one diol or polyol
and additionally at least one of components A or B containing a heat-activatable hardener for epoxy prepolymers and at least one of components A or B containing a heat-activatable blowing agent.

3. The premix according to claim 1 and/or 2, **characterised in that** at least one of components A and B, preferably component B, contains an epoxy prepolymer that is liquid at 22°C.

4. The premix according to claim 3, **characterised in that** at least one of components A and B, preferably component B, additionally contains an epoxy prepolymer that is solid or semi-solid at 22°C.

5. The premix according to one or more of claims 1 to 4, **characterised in that** at least one of components A or B additionally contains a curing accelerator for epoxy prepolymers.

6. The premix according to at least one of claims 1 to 5, **characterised in that** at least one of components A and B additionally contains a curing catalyst for isocyanates.

7. The premix according to one of claims 1 to 6, **characterised in that** component A, relative to the total component A, contains 5 to 100 wt.%, preferably 8 to 85 wt.%, of isocyanate.

8. The premix according to one or more of claims 1 to 7, **characterised in that** one or both of the following conditions applies to the composition of component A:
- The percentage by weight of epoxy prepolymer, relative to the total component A, is 0 to 50 wt.%, preferably 0 to 45 wt.%;
- The percentage by weight of isocyanate, relative to the total component A, is 5 to 90 wt.%, preferably 10 to 85 wt.%.

9. The premix according to claim 7 and/or 8, **characterised in that** component A additionally contains one or more, preferably all, of the following constituents, relative to the total component A:
i) 0 to 20 wt.%, preferably 2 to 10 wt.%, of heat-activatable blowing agent,
ii) 0 to 30 wt.%, preferably 5 to 20 wt.%, of lightweight filler,
iii) 0.5 to 6 wt.%, preferably 1 to 5 wt.%, of water-binding agent such as for example calcium oxide,
iv) 0 to 10 wt.%, preferably 1 to 4 wt.%, of curing accelerator for epoxies,
v) 0 to 50 wt.%, preferably 5 to 20 wt.%, of toughener.

10. The premix according to one or more of claims 1 to 9, **characterised in that** one or both of the following conditions applies to the composition of component B:
- The percentage by weight of epoxy prepolymer, relative to the total component B, is 35 to 80 wt.%, preferably 40 to 65 wt.%;
- The percentage by weight of diol or polyol, relative to the total component B, is 2.5 to 35 wt.%, preferably 4 to 25 wt.%.

11. The premix according to claim 10, **characterised in that** component B additionally contains one or more, preferably all, of the following constituents, relative to the total component B:
i) 0.5 to 5 wt.%, preferably 1 to 3 wt.%, of heat-activatable blowing agent,
ii) 0 to 30 wt.%, preferably 5 to 20 wt.%, of lightweight filler,
iii) 0.5 to 6 wt.%, preferably 1 to 5 wt.%, of water-binding agent such as for example calcium oxide,
iv) 0.5 to 15 wt.%, preferably 1 to 10 wt.%, of heat-activatable hardener for epoxies,
v) 0.005 to 0.5 wt.%, preferably 0.02 to 0.1 wt.%, of curing accelerator for isocyanates as described above, in particular dibutyl tin dilaurate,
vi) 0 to 10 wt.%, preferably 1 to 4 wt.%, of curing accelerator for epoxies, and
vii) 0 to 50 wt.%, preferably 5 to 20 wt.%, of toughener.

12. The premix according to one or more of claims 1 to 11, **characterised in that** for both component A and component B the mixing ratio of constituents that are liquid at a maximum temperature of 100°C under normal pressure to constituents that are solid under said conditions is chosen such that the viscosity of both component A and component B at a temperature of at most 100°C is such that it is pumpable.

13. A method for preparing a heat-expandable and heat-curable epoxy-based material, **characterised in that** components A and B according to one or more of claims 1 to 12 are mixed together at a temperature in the range from 20 to 100°C, the mixture is introduced into a mould and is allowed to pre-cure in the mould at a temperature in the range from 20 to 100°C to form a material that is dimensionally stable up to 40°C.

14. A material that is dimensionally stable at 22°C obtainable according to claim 13.

15. A method for reinforcing and/or insulating a component part, **characterised in that** a material according to claim 14 is applied to the component part or introduced into the component part and expanded and cured at a temperature in the range from 120 to 220°C.

16. A vehicle or metallic component part that has been stiffened or reinforced with at least one moulding obtained according to claim 13.

## Revendications

1. Prémélange à deux composants pour la préparation d'une matière à base d'époxyde, extensible et durcissable par voie thermique, comprenant un composant A et un composant B, dans lequel le composant A contient au moins un isocyanate et le composant B contient au moins un diol ou un polyol, et dans lequel en outre au moins un des composants A ou B contient au moins un prépolymère d'époxyde, au moins un des composants A ou B contient un durcisseur activable par voie thermique pour des prépolymères d'époxydes et au moins un des composants A ou B contient un agent moussant activable par voie thermique.

2. Prémélange à deux composants selon la revendication 1, dans lequel le composant A contient au moins un isocyanate et le composant B contient au moins un prépolymère d'époxyde et au moins un diol ou un polyol, et dans lequel en outre au moins un des composants A ou B contient un durcisseur activable par voie thermique pour des prépolymères d'époxydes et au moins un des composants A ou B contient un agent moussant activable par voie thermique.

3. Prémélange selon les revendications 1 et/ou 2, **caractérisé en ce qu'**au moins un des composants A ou B, de préférence le composant B contient un prépolymère d'époxyde liquide à 22 °C.

4. Prémélange selon la revendication 3, **caractérisé en ce qu'**au moins un des composants A et B, de préférence le composant B contient en outre un prépolymère d'époxyde solide ou semi-solide à 22 °C.

5. Prémélange selon une ou plusieurs des revendications 1 à 4, **caractérisé en ce qu'**au moins un des composants A ou B contient en outre un accélérateur du durcissement pour des prépolymères d'époxydes.

6. Prémélange selon une ou plusieurs des revendications 1 à 5, **caractérisé en ce qu'**au moins un des composants A et B contient en outre un catalyseur du durcissement pour des isocyanates.

7. Prémélange selon une ou plusieurs des revendications 1 à 6, **caractérisé en ce que** le composant A contient, par rapport au composant A dans son ensemble, de 5 à 100 % en poids, de préférence de 8 à 85 % en poids d'isocyanate.

8. Prémélange selon une ou plusieurs des revendications 1 à 7, **caractérisé en ce que**, en ce qui concerne la composition du composant A, il y a lieu de respecter une des conditions suivantes ou les deux :
- la fraction pondérale du prépolymère d'époxyde représente, par rapport au composant A dans son ensemble, de 0 à 50 % en poids, de préférence de 0 à 45 % en poids ;
- la fraction pondérale de l'isocyanate représente, par rapport au composant A dans son ensemble, de 5 à 90 % en poids, de préférence de 10 à 85 % en poids.

9. Prémélange selon les revendications 7 et/ou 8, **caractérisé en ce que** le composant A contient en outre un ou plusieurs constituants, de préférence tous les constituants parmi ceux que l'on indique ci-après, par rapport au composant A dans son ensemble :
i) de 0 à 20 % en poids, de préférence de 2 à 10 % en poids d'un agent moussant activable par voie thermique ;
ii) de 0 à 30 % en poids, de préférence de 5 à 20 % en poids d'une matière de charge légère ;
iii) de 0,5 à 6 % en poids, de préférence de 1 à 5 % en poids d'un agent liant l'eau comme par exemple l'oxyde de calcium ;
iv) de 0 à 10 % en poids, de préférence de 1 à 4 % en poids d'un accélérateur du durcissement pour des époxydes ;
v) de 0 à 50 % en poids, de préférence de 5 à 20 % en poids d'un agent de durcissement.

10. Prémélange selon une ou plusieurs des revendications 1 à 9, **caractérisé en ce que**, en ce qui concerne la composition du composant B, il y a lieu de respecter une des conditions suivantes ou les deux :
- la fraction pondérale du prépolymère d'époxyde représente, par rapport au composant B dans son ensemble, de 35 à 80 % en poids, de préférence de 40 à 65 % en poids ;
- la fraction pondérale du diol ou du polyol représente, par rapport au composant B dans son ensemble, de 2,5 à 35 % en poids, de préférence de 4 à 25 % en poids.

11. Prémélange selon la revendication 10, **caractérisé en ce que** le composant B contient en outre un ou plusieurs constituants, de préférence tous les constituants parmi ceux que l'on indique ci-après, par rapport au composant B dans son ensemble :
i) de 0,5 à 5 % en poids, de préférence de 1 à 3 % en poids d'un agent moussant activable par voie thermique ;
ii) de 0 à 30 % en poids, de préférence de 5 à 20 % en poids d'une matière de charge légère ;
iii) de 0,5 à 6 % en poids, de préférence de 1 à 5 % en poids d'un agent liant l'eau comme par exemple l'oxyde de calcium ;
iv) de 0,5 à 15 % en poids, de préférence de 1 à 10 % en poids d'un durcisseur pour des époxydes, activable par voie thermique ;
v) de 0,005 à 0,5 % en poids, de préférence de 0,02 à 0,1 % en poids d'un accélérateur du durcissement pour des isocyanates comme on l'a décrit ci-dessus, en particulier le dilaurate de dibutylétain ;
vi) de 0 à 10 % en poids, de préférence de 1 à 4 % en poids d'un accélérateur du durcissement pour des époxydes ; et
vii) de 0 à 50 % en poids, de préférence de 5 à 20 % en poids d'un agent de durcissement.

12. Prémélange selon une ou plusieurs des revendications 1 à 11, **caractérisé en ce que**, aussi bien pour le composant A que pour le composant B, on sélectionne le rapport de mélange des constituants liquides à une température maximale de 100 °C sous pression normale à ceux qui sont solides dans ces conditions, de telle sorte que le composant A aussi bien que le composant B présentent une viscosité, à une température maximale de 100 °C, telle qu'ils peuvent être pompés.

13. Procédé pour la préparation d'une matière à base d'époxyde, extensible et durcissable par voie thermique, **caractérisé en ce qu'**on mélange l'un avec l'autre les composants A et B selon une ou plusieurs des revendications 1 à 12 à une température dans la plage de 20 à 100 °C, on incorpore le mélange dans un moule et on le laisse durcir dans le moule à une température dans la plage de 20 à 100 °C pour obtenir une matière qui résiste à la déformation jusqu'à une température de 40 °C.

14. Matière résistant à la déformation à une température de 22 °C, que l'on peut obtenir conformément à la revendication 13.

15. Procédé pour le renforcement et/ou l'isolation d'un élément de construction, **caractérisé en ce qu'**on applique une matière selon la revendication 14 sur l'élément de construction ou bien on l'introduit dans l'élément de construction et on la transforme en mousse et on la durcit à une température dans la plage de 120 à 220 °C.

16. Véhicule ou élément de construction métallique qui a été rigidifié ou renforcé avec au moins un corps moulé que l'on a obtenu conformément à la revendication 13.
